# EUROPEAN PATENT SPECIFICATION

(11) **EP 4 238 736 B1**
(45) Date of publication and mention of the grant of the patent: **09.07.2025**
(21) Application number: 21886280.3
(22) Date of filing: 27.10.2021
(51) Int. Cl.: B29C 45/14, C08G 18/73, C08G 18/32, C08G 18/66, C09D 175/04, C08G 18/24, C09D 175/06, C08G 18/08, C08G 18/22, C09D 175/08, C08G 18/42, C08G 18/44, C08G 18/48, C08G 18/79, C09D 7/63

(54) **TWO-PACK COATING COMPOSITION**
ZWEIKOMPONENTEN-BESCHICHTUNGSZUSAMMENSETZUNG
COMPOSITION DE REVÊTEMENT EN DEUX CONSTITUANTS

(30) Priority: 28.10.2020 JP 2020180757
(43) Date of publication of application: 06.09.2023
(73) Proprietor: Nippon Paint Automotive Coatings Co., Ltd., Hirakata-shi, Osaka 573-1153 (JP)
(72) Inventor: KAWAI, Takashi, Hirakata-shi, Osaka 573-1153 (JP); JINNO, Nobusuke, Hirakata-shi, Osaka 573-1153 (JP)
(74) Representative: Mewburn Ellis LLP
(86) International application number: PCT/JP2021/039696
(87) International publication number: WO 2022/092163

(56) References cited:
- WO-A1-2009/059695
- WO-A1-2020/111568
- JP-A- 2004 359 958
- JP-A- 2007 177 216
- JP-A- 2017 193 705
- JP-A- 2017 534 477
- US-B1- 6 512 044

## Description

### TECHNICAL FIELD

The present invention relates to a two-pack coating composition.

### BACKGROUND ART

Coating films having various roles are formed on surfaces of industrial products and the like. By a coating film, an article to be coated is protected, and at the same time, a beautiful appearance and a superior design are imparted. Generally, a coating film is formed by spray-coating a coating composition containing a solvent such as an organic solvent and/or an aqueous solvent and then drying the coating composition. In recent years, however, scattering of a solvent during spray coating, emission of a solvent to the atmosphere in a drying step, and generation of CO₂, and the like are being recognized as problems. In addition, since spray coating needs a drying step, productivity tends to decrease.

Under such circumstances, as a coating method in place of spray coating, in-mold coating in which coating is carried out in a mold has been proposed (for example, Patent Literature 1).

### CITATIONS LIST

### PATENT LITERATURE

Patent Literature 1: JP-A-2002-292638

### SUMMARY OF INVENTION

### TECHNICAL PROBLEMS

An object of the present invention is to provide a two-pack coating composition suitable for in-mold coating and suitable particularly for a coating material for exterior applications.

### SOLUTIONS TO PROBLEMS

In order to solve the above-described problems, the present invention provides the following embodiments.
[1] A two-pack coating composition comprising a main resin and a curing agent, wherein
   the main resin comprises a polyol, a curing catalyst, and a light stabilizer,
   the curing agent comprises an isocyanurate compound,
   a hydroxyl value of the polyol is 300 mg KOH/g or more and 1000 mg KOH/g or less,
   an average number of hydroxy groups of the polyol is 3 or more,
   a content of the curing catalyst is 0.25 parts by mass or more and 10 parts by mass or less based on 100 parts by mass of the polyol,
   the light stabilizer comprises a hindered amine-based compound,
   a common logarithm pKb of a base dissociation constant of the hindered amine-based compound is 6.5 or more and 14 or less, and
   a content of a solvent is 30% by mass or less.
[2] The two-pack coating composition according to [1], wherein a molecular weight of the hindered amine-based compound is 400 or more and 800 or less.
[3] The two-pack coating composition according to [1] or [2], wherein the isocyanurate compound comprises a trimer of hexamethylene diisocyanate.
[4] The two-pack coating composition according to any one of [1] to [3], wherein the main resin further comprises an ultraviolet absorber.
[5] The two-pack coating composition according to any one of [1] to [4], wherein the polyol is at least one selected from the group consisting of polyester polyol, polyether polyol, and polycarbonate polyol.
[6] The two-pack coating composition according to any one of [1] to [5], wherein a ratio of an isocyanate group equivalent of the isocyanurate compound to a hydroxy group equivalent of the polyol, NCO/OH, is 0.5/1 or more and 2/1 or less.
[7] The two-pack coating composition according to any one of [1] to [6], wherein the curing catalyst comprises at least one organometallic catalyst comprising a metal element selected from the group consisting of Bi, Zn, Al, Zr, and Sn.
[8] The two-pack coating composition according to any one of [1] to [7], which is to be used for exterior applications and for in-mold coating.

### ADVANTAGEOUS EFFECTS OF INVENTION

According to the present invention, it is possible to provide a two-pack coating composition suitable for in-mold coating and suitable particularly for a coating material for exterior applications.

### DESCRIPTION OF EMBODIMENTS

Exterior articles are coated bodies to be mainly used outdoors. A coating material for exterior applications is a material of a coating film to be formed on an exterior article. Exterior articles are required to have severe weatherability. For this, a light stabilizer and/or an ultraviolet absorber are usually blended in coating materials for exterior applications. In the case of in-mold coating, it has been found that particularly the basicity of a light stabilizer greatly affects the physical properties of a coating film. For example, when a light stabilizer high in basicity is used, adhesion of a resulting coating film is reduced and water resistance is also greatly reduced.

In the present embodiment, a hindered amine-based compound (HALS) having a common logarithm pKb of a base dissociation constant of 6.5 or more and 14 or less is used as the light stabilizer. The HALS having such pKb can be said to be weakly basic or neutral. Using the weakly basic or neutral HALS (hereinafter, for convenience, sometimes referred to as neutral HALS) inhibits the adhesion of a coating film from decreasing. In other words, using a neutral HALS can impart weatherability to a coating film without deteriorating water resistance. For this reason, the two-pack coating composition according to the present embodiment is to be used for in-mold coating and is suitably used especially for exterior applications.

It is noted that use of the two-pack coating composition according to the present embodiment in a coating method other than in-mold coating is not excluded. For example, the two-pack coating composition may be applied to open press coating.

The two-pack coating composition according to the present embodiment can be used as a material of a colored coating film located on the outermost side of a coated article, a clear coating film located on the outermost side of a coated article, an intermediate coating film and/or a base coating film interposed between the clear coating film and an article to be coated.

### [Two-pack coating composition]

The two-pack coating composition according to the present embodiment comprises a main resin and a curing agent. The main resin comprises a polyol, a curing catalyst, and a light stabilizer. The curing agent comprises an isocyanurate compound. When the main resin and the curing agent are mixed, the polyol and the isocyanurate compound react with each other to afford a cured coating film. The main resin and/or the curing agent each may be heated and/or vacuum degassed before mixing. Thank to this, the amount of water contained in the two-pack coating composition obtained by mixing the two agents is reduced, and the appearance of a resulting coating film is likely to be improved.

### (Main resin)

The main resin comprises a polyol, a curing catalyst, and a light stabilizer. The polyol is a coating film forming resin. The polyol reacts with a curing agent through, for example, heating, and forms a three-dimensional cured coating film. Hereinafter, curable resins including the polyol contained in the two-pack coating composition are sometimes collectively referred to as coating film forming resins.

In the following, respective components are described in detail.

### <Light stabilizer>

The light stabilizer controls degradation of a coating film due to ultraviolet rays. The light stabilizer efficiently traps alkyl radicals (R·) and peroxy radicals (ROO·) generated by ultraviolet rays. The main resin to be used in the present embodiment comprises a hindered amine-based compound (HALS) as the light stabilizer.

The structure of the HALS is not particularly limited. The HALS has, for example, one or more piperidine skeletons (typically, 2,2,6,6-tetraalkylpiperidine skeletons) in the molecule. Such HALSs are used singly or two or more of them are used in combination.

Generally, HALSs are basic. The common logarithm pKb of the base dissociation constant of a neutral HALS to be used in the present embodiment is 6.5 or more and 14 or less. Thanks to this, the HALS has an increased compatibility with the polyol. The pKb of the neutral HALS is preferably 6.8 or more, more preferably 7.0 or more, and particularly preferably 8 or more. The pKb of the neutral HALS is preferably 13 or less, and particularly preferably 12 or less.

The molecular weight of the neutral HALS is not particularly limited. The molecular weight of the neutral HALS is preferably 400 or more and 800 or less. Thank to this, the compatibility with the polyol is easily increased. In addition, elution or bleed-out of the neutral HALS from a coating film is likely to be prevented. The molecular weight of the neutral HALS is more preferably 410 or more, and still more preferably 420 or more. When the neutral HALS has no hydroxy group in the molecule, the molecular weight of the neutral HALS is more preferably 700 or less, and still more preferably 600 or less. A neutral HALS having a hydroxy group has high compatibility with the polyol even when the molecular weight thereof is relatively large. Therefore, the upper limit value of the molecular weight of the neutral HALS having a hydroxy group may be 790, or may be 780.

Furthermore, the HALS having a hydroxy group is also preferable in that elution or bleed-out from a coating film hardly occurs. In general, a HALS having a large molecular weight is likely to be eluted or bleed out from a coating film. However, since the hydroxy group of the HALS having a hydroxy group can react with the curing agent, elution or bleed-out from a coating film is likely to be prevented even if the HALS has a relatively large molecular weight.

The nitrogen atom constituting the hindered amino group of a neutral HALS (typically, a nitrogen atom in a piperidine skeleton) may be bonded to hydrogen (N-H type), or may be bonded to an alkyl group (N-R type), or may have an ether linkage (NOR type), or may have a hydroxy group via an ether linkage (N-OR-OH type), or may be bonded to an acyl group (N-CO-R type). The hindered amino group is preferably of the N-OR type or the N-CO-R type from the viewpoint that pKb is likely to be large.

Examples of the neutral HALS include HOSTAVIN (registered trademark) 3058 (manufactured by Clariant Chemicals Ltd., pKb = 11.4, molecular weight: 449, N-CO-R type), Tinuvin (registered trademark) 123 (manufactured by BASF, pKb = 9.6, molecular weight: 737, N-OR type), Tinuvin 152 (pKb = 7.0, 9.4, molecular weight: 757, N-OR type), Tinuvin 249 (pKb = about 8, N-R type), and Tinuvin 5100 (pKb = 9.6).

The main resin may comprise other light stabilizers. Such other light stabilizers include, for example, HALS with a pKb of less than 6.5, HALS with a pKb of more than 14, and hindered phenol compounds. Examples of such other HALS include Tinuvin 292 (manufactured by BASF, pKb = 5.1, molecular weight: 509, 370, N-R type), Tinuvin 144 (manufactured by BASF, pKb = 5.5, molecular weight: 685, N-R type), and HOSTAVIN 3050 (Clariant Chemicals Ltd., pKb = 6.1, molecular weight: 616.2, N-H type). Examples of the hindered phenol compound include IRGANOX (registered trademark) 1010 and IRGANOX 1098 (both manufactured by BASF).

The content (PHR: % by mass) of the light stabilizer based on the resin solid content of the coating composition is preferably 1% by mass or more and less than 5% by mass. The PHR of the light stabilizer is more preferably 4% by mass or less, and still more preferably 3% by mass or less. Among the light stabilizers, the neutral HALS accounts for preferably 50% by mass or more, and more preferably 70% by mass or more. The resin solid content of the coating composition is the total solid content of the coating film forming resin and the curing agent. The PHR is a ratio based on 100% by mass of the resin solid content.

### <Ultraviolet absorber>

An ultraviolet absorber (UVA) may be used together with the light stabilizer. Thanks to this, the weatherability can be further improved. Examples of the UVA include benzotriazole-based compounds, triazine-based compounds, benzophenonebased compounds, and benzoate-based compounds. Specifically, examples of the UVA include Tinuvin 326, Tinuvin 384-2, Tinuvin 900, Tinuvin 400, Tinuvin 405, Tinuvin 460, Tinuvin 477, and Tinuvin 479 (all manufactured by BASF).

The content (PHR: % by mass) of the UVA based on 100% by mass of the resin solid content of the coating composition is, for example, 5% by mass or less. The PHR of the UVA is preferably 4% by mass or less, and may be 0%.

### <Polyol>

The polyol is a coating film forming resin. The polyol reacts with a curing agent through, for example, heating, and forms a three-dimensional cured coating film. The polyol has two or more hydroxy groups per molecule. In the present embodiment, the main resin comprises a polyol having 3 or more hydroxy groups on average per molecule. Thanks to this, a coating film with an increased hardness is readily obtained. Polyols are used singly or two or more of them are used in combination.

The main resin may comprise a polyol (A2) having two hydroxy groups per molecule together with a polyol (A1) having three or more hydroxy groups per molecule. The proportion of the polyol (A2) is not particularly limited. The proportion of the polyol (A2) may be 50% by mass or less, or may be 40% by mass or less, or may be 30% by mass or less of the total of the polyol (A1) and the polyol (A2).

The polyol has a hydroxyl value of 300 mg KOH/g or more and 1000 mg KOH/g or less. When the hydroxyl value of the polyol is within the above range, a large rate of the reaction between the polyol and the isocyanate compound is offered when the main resin and the curing agent are mixed. For this, coated articles can be quickly released from a mold, so that the productivity is improved. In addition, the adhesion of a coating film especially to a resin substrate is likely to be improved because a certain degree of reaction heat is generated during the reaction.

When two or more polyols are contained, the apparent hydroxyl value calculated based on the hydroxyl values and the mass ratios of the respective polyols is just required to be 300 mg KOH/g or more and 1000 mg KOH/g or less. In other words, the main resin may comprise a polyol having a hydroxyl value of less than 300 mg KOH/g and/or a polyol having a hydroxyl value of more than 1000 mg KOH/g.

The hydroxyl value of the polyol (including the apparent hydroxyl value; the same applies hereinafter) is preferably 350 mg KOH/g or more, and more preferably 500 mg KOH/g or more. The hydroxyl value of the polyol is preferably 800 mg KOH/g or less, and more preferably 700 mg KOH/g or less.

The type of the polyol is not particularly limited. Examples of the polyol include polyester polyol, polyether polyol, polycarbonate polyol, polyacrylate polyol and polyhydric alcohol. These are used singly or two or more of them are used in combination. Among them, the polyol preferably comprises at least one selected from the group consisting of polyester polyol, polyether polyol, and polycarbonate polyol.

The polyester polyol preferably has a branched structure. The polyester polyol having a branched structure is prepared, for example, by reacting two or more polyvalent carboxylic acids with a trivalent or more polyhydric alcohol compound, and, as necessary, repeating this reaction.

Examples of commercially available products of the polyester polyol include DESMOPHEN VPLS2249/1 (manufactured by Sumika Covestro Urethane Co., Ltd.), DESMOPHEN 800 (manufactured by Sumika Covestro Urethane Co., Ltd.), DESMOPHEN XP2488 (manufactured by Sumika Covestro Urethane Co., Ltd.), KURARAY POLYOL P-510 (manufactured by Kuraray Co., Ltd.), and KURARAY POLYOL F-510 (manufactured by Kuraray Co., Ltd.).

Examples of the polyether polyol include polyethylene glycol, polypropylene glycol, polytetramethylene glycol, and block bodies thereof. The polyether polyol may be prepared by adding ethylene oxide and/or propylene oxide to a polyhydric alcohol compound. According to the above procedure, a polyether polyol in which the number of OH functional groups per molecule is 2, 3, or more can be prepared.

Examples of commercially available products of the polyether polyol include the SANNIX series manufactured by Sanyo Chemical Industries, Ltd. Specifically, SANNIX GP-250, SANNIX GP-400, SANNIX PP-200, and SANNIX GP-600 are included.

The polycarbonate polyol can be prepared, for example, by reacting dimethyl carbonate with a polyhydric polyol.

Examples of commercially available products of the polycarbonate polyol include DURANOL T5650E (manufactured by Asahi Kasei Corporation), C-590 (manufactured by Kuraray Co., Ltd.), and ETERNACOLL PH-50 (manufactured by Ube Industries, Ltd.).

Examples of the polyhydric alcohol include ethylene glycol, glycerin, trimethylolpropane, propylene glycol, tetramethylene glycol, and pentaerythritol.

The weight average molecular weight (Mw) of the polyol is not particularly limited. The Mw of the polyol may be appropriately set according to the hydroxyl value or the like.

The main resin may comprise a polyol having an average number of hydroxy groups of less than 3. The main resin may comprise a coating film forming resin other than the polyol. Examples of the coating film forming resin include acrylic resin, polyester resin, alkyd resin, polyether resin, polyolefin resin, polyurethane resin, polycarbonate resin, melamine resin, epoxy resin, and carbodiimide resin. Other coating film forming resins are used singly or two or more of them are used in combination.

### <Curing catalyst>

The curing catalyst accelerates a curing reaction. The curing catalyst is not particularly limited. From the viewpoint of the accelerating effect, the curing catalyst is preferably, for example, at least one of organometallic catalysts comprising a metal element selected from the group consisting of Bi, Zn, Al, Zr, and Sn. In particular, at least one of organometallic catalysts comprising a metal element selected from the group consisting of Bi, Zn, Al, and Zr is preferable.

Examples of the organometallic catalyst comprising Bi include bismuth carboxylic acid and salts thereof. Examples of the organometallic catalyst comprising Zn include zinc complex catalysts. Examples of the organometallic catalyst comprising Al include aluminum complex catalysts. Examples of the organometallic catalyst comprising Zr include zirconium chelate catalysts. Examples of the organometallic catalyst comprising Sn include dialkyltin dicarboxylates such as dibutyltin dilaurate, dioctyltin dilaurate, and dibutyltin diacetate; tin oxide compounds such as dibutyltin oxide; and tin carboxylates such as tin 2-ethylhexanoate.

Examples of commercially available products of the organometallic catalyst comprising Bi include K-KAT 348 (manufactured by Kusumoto Chemicals, Ltd.) and K-KAT XK-640 (manufactured by Kusumoto Chemicals, Ltd.). Examples of commercially available products of the organometallic catalyst comprising Zr include K-KAT 4205, K-KAT XC-9213, K-KAT XC-A209, and K-KAT 6212 (all manufactured by Kusumoto Chemicals, Ltd.). Examples of a commercially available products of the organometallic catalyst comprising Al include K-KAT 5218 (manufactured by Kusumoto Chemicals, Ltd.). Examples of commercially available products of the organometallic catalyst comprising Zn include K-KAT XK-314, K-KAT XK-635, K-KAT XK-639, and K-KAT XK-620 (all manufactured by Kusumoto Chemicals, Ltd.). Examples of commercially available products of the organometallic catalyst comprising Sn include TVS TIN LAU (manufactured by Nitto Kasei Co., Ltd.).

The content of the curing catalyst is, for example, 0.25 parts by mass or more and 10 parts by mass or less based on 100 parts by mass of the coating film forming resin. Thanks to this, a curing reaction of the coating film forming resin rapidly proceeds. Accordingly, a coating film superior in appearance and physical properties is obtained through layer formation by in-mold coating. The content of the curing catalyst is more preferably 0.5 parts by mass or more based on 100 parts by mass of the coating film forming resin. The content of the curing catalyst is more preferably 7 parts by mass or less based on 100 parts by mass of the coating film forming resin.

### (Curing agent)

The coating film forming resin such as polyol is crosslinked by the curing agent, and a resulting coating film has improved corrosion resistance and durability.

The curing agent comprises an isocyanurate compound. The isocyanurate compound is a trimer of an isocyanate compound and has a ring structure.

The isocyanate compound is not particularly limited, and those publicly known as a curing agent for two-pack reactive compositions are used. Examples of such an isocyanate compound include aromatic diisocyanates such as tolylene diisocyanate (TDI), 4,4'-diphenylmethane diisocyanate (MDI), xylylene diisocyanate (XDI), and meta-xylylene diisocyanate (MXDI); aliphatic diisocyanates such as hexamethylene diisocyanate (HDI), tetramethylene diisocyanate, 2-methyl-pentane -1,5-diisocyanate, 3-methyl-pentane -1,5-diisocyanate, lysine diisocyanate, and trioxyethylene diisocyanate; and alicyclic diisocyanates such as isophorone diisocyanate (IPDI), cyclohexyl diisocyanate, 4,4'-dicyclohexylmethane diisocyanate, norbornane diisocyanate, hydrogenated tolylene diisocyanate, hydrogenated xylene diisocyanate, and hydrogenated tetramethyl xylene diisocyanate. These may be used singly or two or more of them may be used in combination.

Among them, aliphatic diisocyanates are preferable, and HDI is more preferable from the viewpoint of relatively low viscosity. Trimers of these isocyanates are particularly highly reactive with polyols. Therefore, the trimers are more suitably used for a method for forming a coating layer by in-mold coating.

The ratio of the isocyanate group equivalent of the isocyanurate compound to the hydroxy group equivalent of the polyol, NCO equivalent/OH equivalent, is preferably 0.5/1.0 or more and 2.0/1.0 or less, and more preferably 0.9/1.0 or more and 1.2/1.0 or less. When the equivalent ratio is within the above range, the coating composition has high curability, and is suitably used especially for coating layer formation by in-mold coating.

The curing agent may contain a curing agent other than the isocyanurate compound. Examples of the other curing agent include an amino resin, a monomer or dimer of the isocyanate compound, a biuret body of the isocyanate compound, a blocked product of the isocyanate compound, an epoxy compound, an aziridine compound, a carbodiimide compound, and an oxazoline compound. These are used singly or two or more of them are used in combination.

The content of the curing agent is, for example, 35% by mass or more and 90% by mass or less of the resin solid content of the coating composition. The content of the curing agent is preferably 45% by mass or more, and more preferably 55% by mass or more. The content of the curing agent is preferably 85% by mass or less, and more preferably 70% by mass or less.

### (Solvent)

The content of the solvent contained in the coating composition is 30% by mass or less. Thanks to this, a cured coating film is rapidly obtained. Accordingly, a coating film superior in appearance and physical properties is obtained through layer formation by in-mold coating. The content of the solvent is preferably 10% by mass or less, and may be 0%.

The solvent is not particularly limited. The solvent is usually an organic solvent. Examples of the organic solvent include ester-based solvents such as ethyl acetate, butyl acetate, isopropyl acetate, ethylene glycol monoethyl ether acetate, propylene glycol monomethyl ether acetate, and propylene glycol monoethyl ether acetate; ether-based solvents such as propylene glycol monomethyl ether, ethylene glycol monomethyl ether, methylmethoxybutanol, ethoxypropanol, ethylene glycol isopropyl ether, ethylene glycol-t-butyl ether, ethylene glycol monoethyl ether, ethylene glycol monobutyl ether, methoxybutanol, and propylene glycol monobutyl ether; alcohol-based solvents such as methanol, ethanol, butanol, and propyl alcohol; ketonebased solvents such as acetone, methyl ethyl ketone, and methyl isobutyl ketone; aliphatic hydrocarbon-based solvents such as Swasol, ShellSol, and Mineral Spirit; and aromatic solvents such as xylene, toluene, Solvesso-100 (S-100), and Solvesso-150 (S-150). These are used singly or two or more of them are used in combination.

### <Pigment>

The main resin may comprise a pigment. Examples of the pigment include coloring pigments, glitter, and extender pigments. The content of the pigment is not particularly limited. The content of the pigment may be appropriately set according to the type, purpose, and the like.

Examples of the glitter include metal flakes (aluminum, chromium, gold, silver, copper, brass, titanium, nickel, nickel chromium, stainless steel, and the like), metal oxide flakes, pearl pigments, glass flakes coated with metal or metal oxide, silica flakes coated with metal oxide, graphite, hologram pigments, and cholesteric liquid crystal polymers. These are used singly or two or more of them are used in combination.

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylenebased pigments, dioxane-based pigments, quinacridone-based pigments, isoindolinonebased pigments, and metal complex pigments; and inorganic coloring pigments such as chrome yellow, yellow iron oxide, red iron oxide, carbon black, and titanium dioxide. These are used singly or two or more of them are used in combination.

Examples of the extender pigment include calcium carbonate, barium sulfate, clay, and talc. These are used singly or two or more of them are used in combination.

### (Others)

The two-pack coating composition may comprise other components, as necessary. Examples of such other components include additives that can be usually used in the coating field and the coating material field. Specifically, examples thereof include various pigments, surface conditioning agents, viscosity modifiers, antioxidants, ultraviolet inhibitors, antifoaming agents, catalyst aids, rust inhibitors, sedimentation inhibitors, and dispersants. These additives may be added to the main resin or may be added to the curing agent. The amount of the additives is not particularly limited, and may be appropriately set, as necessary.

### [In-mold coating]

In-mold coating is a method of forming a coating layer in a mold. In in-mold coating, a coated body is produced by a method comprising a step of injecting the two-pack coating composition to between a surface of an article to be coated and a cavity surface and/or a core surface of a mold, and a step of curing the two-pack coating composition injected. The curing step may be carried out in the mold.

By in-mold coating, since the coating layer is formed in the mold, adhesion of dust or the like between the article to be coated and a coating layer or mixing of dust or the like into the coating layer is inhibited. In addition, since there is no or a little influence of the surface condition of the article to be coated, a pattern of the mold can be transferred to the coating layer with high accuracy. In addition, since the amount of the solvent contained in the coating composition is small, a drying step for removing the solvent is not required, so that productivity is improved. Furthermore, it is possible to form a thick coating layer with controlled sagging or bubbles.

A resin article to be coated may also be molded in the same mold. In this case, the coated body is produced by a method comprising a step of forming a resin article to be coated in a mold, a step of injecting the two-pack coating composition to between a surface of the article obtained and a cavity surface and/or a core surface of the mold, and a step of curing the two-pack coating composition injected. The curing step may be carried out in the mold.

The viscosity of the two-pack coating composition when injected into the mold is preferably 100 mPa·s or more and 500 mPa·s or less. If necessary, the main resin and/or the curing agent of the two-pack coating composition may be heated to adjust the viscosity.

The resin article to be coated may be either a thermoplastic resin or a thermosetting resin. Examples of the resin constituting the resin article to be coated include polypropylene (PP) resin, acrylonitrile·butadiene·styrene copolymer (ABS resin), polycarbonate (PC)/ABS resin, PC/acrylonitrile·ethylene-propylene-diene·styrene copolymer (AES resin), AES resin, PC/polybutylene terephthalate (PBT) resin, PC/polyethylene terephthalate (PET) resin, PC resin, polymethyl methacrylate (PMMA) resin, GF-PBT resin, GF-polyamide (PA) resin, Noryl·GTX resin, polyvinyl chloride (PVC resin), acrylonitrile·styrene·acrylic (ASA) resin, carbon fiber-reinforced plastic (CFRP resin), and glass fiber-reinforced plastic (GFRP resin).

The coating layer formed of the two-pack coating composition has superior weatherability and water resistance. For this, the resulting coated body is suitably used for, for example, an exterior article of an automobile and building applications.

### EXAMPLES

The present invention will be described hereafter in more detail by way of examples, to which the present invention is not intended to be limited. In the examples, "parts" and "%" are on a mass basis unless otherwise indicated.

### [Example 1]

A main resin was prepared by mixing 100 parts of a polyol (SANNIX GP-250, manufactured by Sanyo Chemical Industries, Ltd., hydroxyl value: 670 mg KOH/g, average number of hydroxy groups: 3), a HALS (HOSTAVIN 3058, manufactured by Clariant Chemicals Ltd., pKb = 11.4, molecular weight: 449, N-CO-R type), 3 parts (active ingredient amount) of a curing catalyst (K-KAT XK-640, manufactured by Kusumoto Chemicals, Ltd., organometallic catalyst containing Bi), a UVA (Tinuvin 384-2, manufactured by BASF, benzotriazole-based compound), and a UVA (Tinuvin 400, manufactured by BASF, triazine-based compound). In the table, the amounts of the HALS and the respective UVAs are expressed as a proportion (PHR) based on 100% by mass of the resin solid content (polyol and curing agent).

Separately, 218 parts of an isocyanurate compound (DESMODUR N3600, manufactured by Sumika Covestro Urethane Co., Ltd., a nurate body of HDI) was prepared as a curing agent.

NCO/OH = 1.0/1.0 and the solvent content as a two-pack coating composition was 0%.

### [Examples 2 to 19 and Comparative Examples 1 to 11]

Main resins and curing agents were prepared by the same procedure as in Example 1 except that the type and amount of each component were changed as shown in Tables 1 to 3.

In each of Examples 13 to 15 and Comparative Example 9, ethyl acetate, which is an organic solvent, was mixed with the main resin. In Tables 1 to 3, the solvent amount is expressed as a ratio relative to the two-pack coating composition.

The components in the above tables are as follows.

### (Polyol)

SANNIX GP-250: manufactured by Sanyo Chemical Industries, Ltd., polyether polyol, hydroxyl value: 670 mg KOH/g, average number of hydroxy groups: 3.

SANNIX GP-400: manufactured by Sanyo Chemical Industries, Ltd., polyether polyol, hydroxyl value: 400 mg KOH/g, average number of hydroxy groups: 3.

SANNIX GP-600: manufactured by Sanyo Chemical Industries, Ltd., polyether polyol, hydroxyl value: 280 mg KOH/g, average number of hydroxy groups: 3.

DESMOPHEN VPLS2249/1: manufactured by Sumika Covestro Urethane Co., Ltd., polyester polyol, hydroxyl value: 512 mg KOH/g, average number of hydroxy groups: 3 or more.

DESMOPHEN XP2488: manufactured by Sumika Covestro Urethane Co., Ltd., polyester polyol, hydroxyl value: 528 mg KOH/g, average number of hydroxy groups: 3 or more.

SANNIX PP-200: manufactured by Sanyo Chemical Industries, Ltd., polyether polyol, hydroxyl value: 560 mg KOH/g, average number of hydroxy groups: 2.

SANNIX PP-600: manufactured by Sanyo Chemical Industries, Ltd., polyether polyol: hydroxyl value: 187 mg KOH/g, average number of hydroxy groups: 2.

DURANOL T5650E: manufactured by Asahi Kasei Corporation, polycarbonate polyol, hydroxyl value: 225 mg KOH/g, average number of hydroxy groups: 2.

### (HALS)

Tinuvin 292: manufactured by BASF, pKb = 5.1, molecular weight: 509,370, N-R type.

HOSTAVIN 3050: manufactured by Clariant Chemicals Ltd., pKb = 6.1, molecular weight: 616.2, N-H type

Tinuvin 152: manufactured by BASF, pKb = 7.0, 9.4, molecular weight: 757, N-OR type.

### (Curing catalyst)

TVS TIN LAU: manufactured by Nitto Kasei Co., Ltd., organometallic catalyst containing Sn.

### (Curing agent)

DURANATE 24A-100: manufactured by Asahi Kasei Corporation, biuret body of HDI.

DESMODUR N3400: manufactured by Sumika Covestro Urethane Co., Ltd., dimer of HDI.

Using the two-pack coating compositions prepared in Examples and Comparative Examples, the following evaluations were carried out. The results of the evaluations are shown in Tables 1 to 3.

### (1) Coating workability

A curing agent was added to a main resin prepared. After the addition of the curing agent, the mixture was mixed for 15 seconds, and a sample was then taken out. The time when the sample was taken out was defined as a coating operation time start: 0 seconds, and the sample taken out was stirred with a spatula. The time required for the sample to reach a state in which it does not immediately drop due to the loss of fluidity caused by the curing reaction of the base and curing agents was measured as a coating operation time, and was evaluated according to the following criteria.

### (Evaluation criteria)

Good: The coating operation time is 10 seconds or more and less than 60 seconds.

Fair: The coating operation time is 60 seconds or more and less than 180 seconds.

Poor: The coating operation time is less than 10 seconds, or 180 seconds or more.

### (2) Appearance of coating layer

First, a test plate for evaluation was prepared.

The main resin and the curing agent of the two-pack coating composition obtained were mixed. An ABS plate was placed in a mold (mold inner area: 100 cm²), and then the coating composition was injected. The mold was then heated at 80°C for 5 minutes. In this way, a test plate including the ABS plate and a 150 µm thick coating layer formed on a surface of the ABS plate was obtained.

The evaluation test plate was left standing at 23°C for 72 hours, and then heated at 80°C for 20 minutes. The appearance of the test plate obtained was visually evaluated according to the following criteria.

### (Evaluation criteria)

Good: None of generation of granular matter, generation of bubble entrainment, and generation of nest holes (holes in which air easily accumulates) are observed.

Fair: Entrainment of bubbles is slightly observed.

Poor: One or more of generation of granular matter, generation of bubble entrainment, and generation of nest holes (holes in which air easily accumulates) are clearly observed.

### (3) Weatherability

A test plate obtained in the same method as described above was subjected to an accelerated weatherability test for 800 hours in accordance with JIS B 7753 using a Sunshine Weather Meter S80 (sunshine carbon arc accelerated weathering tester, manufactured by Suga Test Instruments Co., Ltd.). The 60° gloss values of the coating film before and after the test were measured with a gloss meter GN-268 Plus (manufactured by Konica Minolta, Inc.), and a gloss retention was calculated using the following formula. The gloss retention calculated was evaluated according to the following criteria. Gloss retention = 100 × {(60° gloss value before test) - (60° gloss value after test)}/(60° gloss value before test)

### (Evaluation criteria)

Good: Gloss retention is 80% or more.
Fair: Gloss retention is 60% or more and less than 80%.
Poor: Gloss retention is less than 60%.

### (4) Water resistance

A test plate obtained in the same method as described above was immersed in a water tank maintained at 40°C for 240 hours. Thereafter, the test plate was lifted from the water and dried at normal temperature for 1 hour. Then, 10 slits were made in each of the longitudinal and lateral directions at an interval of 1 mm with a utility knife on the coating film of the test plate, and CELLOTAPE (registered trademark in Japan) (manufactured by Nichiban Co., Ltd.) was attached thereon and then peeled off. Of the 100 squares, the number of squares in which the coating film remained was counted. The larger the number of squares in which the coating film remains, the better the adhesion after the water resistance test and the higher the water resistance. The number of the counted squares was evaluated according to the following criteria.

### (Evaluation criteria)

Good: The number of the counted squares is 81 or more.
Fair: The number of the counted squares is 60 or more and 80 or less.
Poor: The number of the counted squares is 59 or less.

**[Table 1]**

| | | | | | Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Main resin | Polyol | | (Hydroxyl value) | (Number of hydroxy groups) | | | | | | | | | | |
| | | SANNIX GP-250 | 670 | 3 | 100 | | | | | 75 | 100 | 100 | 100 | 100 |
| | | SANNIX GP-400 | 400 | 3 | | | | | 100 | | | | | |
| | | SANNIX GP-600 | 280 | 3 | | | | | | | | | | |
| | | DESMOPHEN VPLS2249/1 | 512 | 3 or more | | 100 | | 50 | | | | | | |
| | | DESMOPHEN XP2488 | 528 | 3 or more | | | 100 | 50 | | | | | | |
| | | SANNIX PP-200 | 560 | 2 | | | | | | | | | | |
| | | SANNIX PP-600 | 187 | 2 | | | | | | | | | | |
| | | DURANOL T5650E | 225 | 2 | | | | | | | | | | |
| | | Ethylene glycol | 1809 | 2 | | | | | | 25 | | | | |
| | Curing catalyst | XK-640 | | | 3 | 3 | 3 | 3 | 3 | 3 | 3 | 3 | 3 | 3 |
| | | TVS Tin LAU | | | | | | | | | | | | |
| | HALS (PHR: % by mass) | | (pKb) | (Molecular weight) | | | | | | | | | | |
| | | Tinuvin 292 | 5.1 | 509, 370 | | | | | | | | | | |
| | | HOSTAVIN 3050 | 6.1 | 616.2 | | | | | | | | | | |
| | | HOSTAVIN 3058 | 11.4 | 449 | 1 | 1 | 1 | 1 | 1 | 1 | | 1 | 1 | 1 |
| | | Tinuvin 152 (with OH) | 7.0, 9.4 | 757 | | | | | | | 1 | | | |
| | UVA (PHR: % by mass) | Tinuvin 384-2 | | | 1 | 1 | 1 | 1 | 1 | 1 | 1 | | 2 | |
| | | Tinuvin 400 | | | 1 | 1 | 1 | 1 | 1 | 1 | 1 | | | 2 |
| Curing agent | | | (Type) | | | | | | | | | | | |
| | | DESMODUR N3600 | Nurate | | 218 | 167 | 172 | 169 | 130 | 311 | 218 | 218 | 218 | 218 |
| | | DURANATE 24A-100 | Biuret | | | | | | | | | | | |
| | | DESMODUR N3400 | Dimer | | | | | | | | | | | |
| | | NCO/OH | | | 1.0 | 1.0 | 1.0 | 1.0 | 1.0 | 1.0 | 1.0 | 1.0 | 1.0 | 1.0 |
| Solvent | | Ethyl acetate (% by mass) | | | | | | | | | | | | |
| Evaluation results | | (1) Coating workability | | | Good | Good | Good | Good | Good | Good | Good | Good | Good | Good |
| | | (2) Evaluation of appearance of coating layer | | | Good | Good | Good | Good | Good | Fair | Good | Good | Good | Good |
| | | (3) Weatherability | | | Good | Good | Good | Good | Fair | Good | Good | Good | Good | Good |
| | | (4) Water resistance | | | Good | Good | Good | Good | Good | Good | Good | Good | Good | Good |

**[Table 2]**

| | | | | | Example | | | | | | | | |
|---|---|---|---|---|---|---|---|---|---|---|---|---|---|
| | | | | | 11 | 12 | 13 | 14 | 15 | 16 | 17 | 18 | 19 |
| Main resin | Polyol | | (Hydroxyl value) | (Number of hydroxy groups) | | | | | | | | | |
| | | SANNIX GP-250 | 670 | 3 | 50 | 100 | 100 | 100 | 100 | 100 | 100 | 100 | 100 |
| | | SANNIX GP-400 | 400 | 3 | | | | | | | | | |
| | | SANNIX GP-600 | 280 | 3 | | | | | | | | | |
| | | DESMOPHEN VPLS2249/1 | 512 | 3 or more | | | | | | | | | |
| | | DESMOPHEN XP2488 | 528 | 3 or more | 50 | | | | | | | | |
| | | SANNIX PP-200 | 560 | 2 | | | | | | | | | |
| | | SANNIX PP-600 | 187 | 2 | | | | | | | | | |
| | | DURANOL T5650E | 225 | 2 | | | | | | | | | |
| | | Ethylene glycol | 1809 | 2 | | | | | | | | | |
| | Curing catalyst | XK-640 | | | 3 | 3 | 3 | 3 | 3 | 8 | | 3 | 3 |
| | | TVS Tin LAU | | | | | | | | | 0.25 | | |
| | HALS (PHR: % by mass) | | (pKb) | (Molecular weight) | | | | | | | | | |
| | | Tinuvin 292 | 5.1 | 509, 370 | | | | | | | | | |
| | | HOSTAVIN 3050 | 6.1 | 616.2 | | | | | | | | | |
| | | HOSTAVIN 3058 | 11.4 | 449 | 1 | 0.5 | 1 | 1 | 1 | 1 | 1 | 1 | 1 |
| | | Tinuvin 152 (with OH) | 7.0, 9.4 | 757 | | 0.5 | | | | | | | |
| | UVA (PHR: % by mass) | Tinuvin 384-2 | | | 1 | 1 | 1 | 1 | 1 | 1 | 1 | 1 | 1 |
| | | Tinuvin 400 | | | 1 | 1 | 1 | 1 | 1 | 1 | 1 | 1 | 1 |
| Curing agent | | | (Type) | | | | | | | | | | |
| | | DESMODUR N3600 | Nurate | | 195 | 218 | 218 | 218 | 218 | 218 | 218 | 109 | 436 |
| | | DURANATE 24A-100 | Biuret | | | | | | | | | | |
| | | DESMODUR N3400 | Dimer | | | | | | | | | | |
| | | NCO/OH | | | 1.0 | 1.0 | 1.0 | 1.0 | 1.0 | 1.0 | 1.0 | 0.5 | 2.0 |
| Solvent | | Ethyl acetate (% by mass) | | | | | 10 | 20 | 30 | | | | |
| Evaluation results | | (1) Coating workability | | | Good | Good | Good | Fair | Fair | Good | Fair | Fair | Fair |
| | | (2) Evaluation of appearance of coating layer | | | Good | Good | Good | Fair | Fair | Good | Good | Good | Good |
| | | (3) Weatherability | | | Good | Good | Good | Good | Good | Good | Good | Fair | Fair |
| | | (4) Water resistance | | | Good | Good | Good | Good | Good | Good | Good | Good | Good |

**[Table 3]**

| | | | | | Comparative Example | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| Main resin | Polyol | | (Hydroxyl value) | (Number of hydroxy groups) | | | | | | | | | | | |
| | | SANNIX GP-250 | 670 | 3 | | | | 100 | 100 | 100 | 100 | 100 | 100 | 100 | 100 |
| | | SANNIX GP-400 | 400 | 3 | | | | | | | | | | | |
| | | SANNIX GP-600 | 280 | 3 | | 100 | | | | | | | | | |
| | | DESMOPHEN VPLS2249/1 | 512 | 3 or more | | | | | | | | | | | |
| | | DESMOPHEN XP2488 | 528 | 3 or more | | | | | | | | | | | |
| | | SANNIX PP-200 | 560 | 2 | | | 100 | | | | | | | | |
| | | SANNIX PP-600 | 187 | 2 | 100 | | | | | | | | | | |
| | | DURANOL T5650E | 225 | 2 | | | | | | | | | | | |
| | | Ethylene glycol | 1809 | 2 | | | | | | | | | | | |
| | Curing catalyst | XK-640 | | | 3 | 3 | 3 | 3 | 3 | 3 | 3 | 3 | 3 | 12 | 0.2 |
| | | TVS Tin LAU | | | | | | | | | | | | | |
| | HALS (PHR: % by mass) | | (pKb) | (Molecular weight) | | | | | | | | | | | |
| | | Tinuvin 292 | 5.1 | 509, 370 | | | | | | | 1 | | | | |
| | | HOSTAVIN 3050 | 6.1 | 616.2 | | | | | | | | 1 | | | |
| | | HOSTAVIN 3058 | 11.4 | 449 | 1 | 1 | 1 | 1 | 1 | | | | 1 | 1 | 1 |
| | | Tinuvin 152 (with OH) | 7.0, 9.4 | 757 | | | | | | | | | | | |
| | UVA (PHR: % by mass) | Tinuvin 384-2 | | | 1 | 1 | 1 | 1 | 1 | 1 | 1 | 1 | 1 | 1 | 1 |
| | | Tinuvin 400 | | | 1 | 1 | 1 | 1 | 1 | 1 | 1 | 1 | 1 | 1 | 1 |
| Curing agent | | | (Type) | | | | | | | | | | | | |
| | | DESMODUR N3600 | Nurate | | 61 | 91 | 182 | | | 218 | 218 | 218 | 218 | 218 | 218 |
| | | DURANATE 24A-100 | Biuret | | | | | 223 | | | | | | | |
| | | DESMODUR N3400 | Dimer | | | | | | 207 | | | | | | |
| | | NCO/OH | | | 1.0 | 1.0 | 1.0 | 1.0 | 1.0 | 1.0 | 1.0 | 1.0 | 1.0 | 1.0 | 1.0 |
| Solvent | | Ethyl acetate (% by mass) | | | | | | | | | | | 40 | | |
| Evaluation results | | (1) Coating workability | | | Good | Good | Good | Good | Good | Good | Good | Good | Poor | Poor | Poor |
| | | (2) Evaluation of appearance of coating layer | | | Good | Good | Good | Good | Good | Good | Good | Good | Poor | Good | Good |
| | | (3) Weatherability | | | Poor | Poor | Poor | Poor | Poor | Poor | Good | Good | Good | Good | Good |
| | | (4) Water resistance | | | Poor | Good | Good | Good | Good | Good | Poor | Poor | Good | Good | Good |

### INDUSTRIAL APPLICABILITY

The two-pack coating composition of the present invention can be suitably used in a coating method different from the conventional spray coating, such as a method for forming a coating layer by in-mold coating. The two-pack coating composition of the present invention is suitably used especially for exterior applications because the coating composition can afford coating films superior in weatherability and water resistance.

## Claims

1. A two-pack coating composition comprising a main resin and a curing agent, wherein
the main resin comprises a polyol, a curing catalyst, and a light stabilizer,
the curing agent comprises an isocyanurate compound,
a hydroxyl value of the polyol is 300 mg KOH/g or more and 1000 mg KOH/g or less,
an average number of hydroxy groups of the polyol is 3 or more,
a content of the curing catalyst is 0.25 parts by mass or more and 10 parts by mass or less based on 100 parts by mass of the polyol,
the light stabilizer comprises a hindered amine-based compound,
a common logarithm pKb of a base dissociation constant of the hindered amine-based compound is 6.5 or more and 14 or less, and
a content of a solvent is 30% by mass or less.

2. The two-pack coating composition according to claim 1, wherein a molecular weight of the hindered amine-based compound is 400 or more and 800 or less.

3. The two-pack coating composition according to claim 1 or 2, wherein the isocyanurate compound comprises a trimer of hexamethylene diisocyanate.

4. The two-pack coating composition according to any one of claims 1 to 3, wherein the main resin further comprises an ultraviolet absorber.

5. The two-pack coating composition according to any one of claims 1 to 4, wherein the polyol is at least one selected from the group consisting of polyester polyol, polyether polyol, and polycarbonate polyol.

6. The two-pack coating composition according to any one of claims 1 to 5, wherein a ratio of an isocyanate group equivalent of the isocyanurate compound to a hydroxy group equivalent of the polyol, NCO/OH, is 0.5/1 or more and 2/1 or less.

7. The two-pack coating composition according to any one of claims 1 to 6, wherein the curing catalyst comprises at least one organometallic catalyst comprising a metal element selected from the group consisting of Bi, Zn, Al, Zr, and Sn.

8. The two-pack coating composition according to any one of claims 1 to 7, which is to be used for exterior and in-mold coating.

## Patentansprüche

1. Zweikomponenten-Beschichtungszusammensetzung, die ein Hauptharz und ein Härtungsmittel umfasst, wobei
das Hauptharz ein Polyol, einen Härtungskatalysator und einen Lichtstabilisator umfasst,
das Härtungsmittel eine Isocyanuratverbindung umfasst,
der Hydroxylwert des Polyols 300 mg KOH/g oder mehr und 1000 mg KOH/g oder weniger beträgt,
die durchschnittliche Anzahl der Hydroxylgruppen 3 oder mehr beträgt,
der Gehalt des Härtungskatalysators 0,25 Massenteile oder mehr und 10 Massenteile oder weniger, bezogen auf 100 Massenteile des Polyols, beträgt,
der Lichtstabilisator eine Verbindung auf Basis eines sterisch gehinderten Amins umfasst,
der dekadische Logarithmus pKb einer Basendissoziationskonstante der Verbindung auf Basis eines sterisch gehinderten Amins 6,5 oder mehr und 14 oder weniger beträgt und
der Gehalt eines Lösungsmittels 30 Massen-% oder weniger beträgt.

2. Zweikomponenten-Beschichtungszusammensetzung nach Anspruch 1, wobei das Molekulargewicht der Verbindung auf Basis eines sterisch gehinderten Amins 400 oder mehr und 800 oder weniger beträgt.

3. Zweikomponenten-Beschichtungszusammensetzung nach Anspruch 1 oder 2, wobei die Isocyanuratverbindung ein Trimer von Hexamethylendiisocyanat umfasst.

4. Zweikomponenten-Beschichtungszusammensetzung nach einem der Ansprüche 1 bis 3, wobei das Hauptharz weiters einen Ultraviolettabsorber umfasst.

5. Zweikomponenten-Beschichtungszusammensetzung nach einem der Ansprüche 1 bis 4, wobei das Polyol zumindest ein aus der aus Polyesterpolyol, Polyetherpolyol und Polycarbonatpolyol bestehenden Gruppe ausgewähltes ist.

6. Zweikomponenten-Beschichtungszusammensetzung nach einem der Ansprüche 1 bis 5, wobei das Verhältnis zwischen dem Isocyanatgruppenäquivalent der Isocyanuratverbindung und dem Hydroxygruppenäquivalent des Polyols, NCO/OH, 0,5:1 oder mehr und 2:1 oder weniger beträgt.

7. Zweikomponenten-Beschichtungszusammensetzung nach einem der Ansprüche 1 bis 6, wobei der Härtungskatalysator zumindest einen organometallischen Katalysator umfasst, der ein Metallelement umfasst, das aus der aus Bi, Zn, Al, Zr und Sn bestehenden Gruppe ausgewählt ist.

8. Zweikomponenten-Beschichtungszusammensetzung nach einem der Ansprüche 1 bis 7, die für Beschichtungen im Freien und In-Mold-Beschichtungen verwendet wird.

## Revendications

1. Composition de revêtement à deux composants comprenant une résine principale et un agent de durcissement, dans laquelle
la résine principale comprend un polyol, un catalyseur de durcissement et un photostabilisant,
l'agent de durcissement comprend un composé isocyanurate,
un indice d'hydroxyle du polyol est de 300 mg de KOH/g ou plus et de 1 000 mg de KOH/g ou moins,
un nombre moyen de groupes hydroxy du polyol est de 3 ou plus,
une teneur du catalyseur de durcissement est de 0,25 partie en masse ou plus et de 10 parties en masse ou moins sur la base de 100 parties en masse du polyol,
le photostabilisant comprend un composé à base d'amine encombrée,
un logarithme décimal pKb d'une constante de dissociation basique du composé à base d'amine encombrée est de 6,5 ou plus et de 14 ou moins, et
une teneur d'un solvant est de 30 % en masse ou moins.

2. Composition de revêtement à deux composants selon la revendication 1, dans laquelle un poids moléculaire du composé à base d'amine encombrée est de 400 ou plus et de 800 ou moins.

3. Composition de revêtement à deux composants selon la revendication 1 ou 2, dans laquelle le composé d'isocyanurate comprend un trimère de diisocyanate d'hexaméthylène.

4. Composition de revêtement à deux composants selon l'une quelconque des revendications 1 à 3, dans laquelle la résine principale comprend en outre un absorbeur d'ultraviolets.

5. Composition de revêtement à deux composants selon l'une quelconque des revendications 1 à 4, dans laquelle le polyol est au moins un choisi dans le groupe comprenant polyester polyol, polyéther polyol et polycarbonate polyol.

6. Composition de revêtement à deux composants selon l'une quelconque des revendications 1 à 5, dans laquelle un rapport d'un équivalent de groupe isocyanate du composé d'isocyanurate à un équivalent de groupe hydroxy du polyol, NCO/OH, est de 0,5/1 ou plus et de 2/1 ou moins.

7. Composition de revêtement à deux composants selon l'une quelconque des revendications 1 à 6, dans laquelle le catalyseur de durcissement comprend au moins un catalyseur organométallique comprenant un élément métallique choisi dans le groupe comprenant Bi, Zn, Al, Zr et Sn.

8. Composition de revêtement à deux composants selon l'une quelconque des revendications 1 à 7, qui doit être utilisée pour un revêtement extérieur et dans le moule.
